(19) Europäisches Patentamt
European Patent Office
Office européen des brevets

(11) **EP 4 245 477 A1**

(12) **EUROPEAN PATENT APPLICATION**

(43) Date of publication:
**20.09.2023 Bulletin 2023/38**

(51) International Patent Classification (IPC):
***B25J 9/16*** (2006.01)

(21) Application number: **23156253.9**

(52) Cooperative Patent Classification (CPC):
**B25J 9/1612**

(22) Date of filing: **13.02.2023**

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**KH MA MD TN**

(30) Priority: **14.03.2022 JP 2022039220**

(71) Applicant: **OMRON Corporation**
**Kyoto 600-8530 (JP)**

(72) Inventor: **BIWAKI, Shu**
**Kyoto-shi, 600-8530 (JP)**

(74) Representative: **Mewburn Ellis LLP**
**Aurora Building**
**Counterslip**
**Bristol BS1 6BX (GB)**

(54) **ROBOT SYSTEM AND CONTROLLER**

(57)     A robot system (1) includes a robot (10) to which a gripper (20) having a plurality of claws (22, 23) is attached at an arm end of the robot as an end effector; and a controller configured to control the robot. The controller (100) includes: a first command generating module (130) configured to generate a first command to close the claws of the gripper in accordance with a predetermined operation profile; and a second command generating module (140) configured to generate a second command to move the arm end of the robot along a predetermined direction by a displacement calculated in accordance with the first command generated by the first command generating module.

FIG.5

**Description**

BACKGROUND OF THE INVENTION

Field of the Invention

The present invention relates to a robot system and a controller.

Description of the Background Art

In the field of industrial automation, robots are used for various applications. Depending on the application, it is required to control the robot as accurately as possible.

For example, Japanese Patent Laying-Open No. 2013-206425 discloses a robot control device capable of further reducing a trajectory error during a multi-axis synchronous operation of a robot.

SUMMARY OF THE INVENTION

The above-described prior art discloses a technique for synchronizing a plurality of axes configuring a robot, but does not, for example, disclose a configuration for synchronizing the axes configuring the robot and other mechanisms. The present invention provides a technique for positioning a gripper in conjunction with an operation of the gripper of a robot.

A robot system according to one aspect includes a robot to which a gripper having a plurality of claws is attached at an arm end of the robot as an end effector; and a controller configured to control the robot. The controller includes: a first command generating module configured to generate a first command to close the claws of the gripper in accordance with a predetermined operation profile; and a second command generating module configured to generate a second command to move the arm end of the robot along a predetermined direction by a displacement calculated in accordance with the first command generated by the first command generating module.

According to this configuration, by operating the gripper in accordance with the predetermined operation profile, the arm end of the robot can be moved in accordance with the operation of the gripper. Thus, the operation of the gripper and the positioning of the gripper can be determined at more appropriate timing.

The operation profile may define change of a distance between the claws of the gripper with respect to time. According to this configuration, the distance between the claws of the gripper can be controlled in accordance with a purpose.

The second command generating module may output a second displacement as the second command, the second displacement being calculated by multiplying a first displacement by a predetermined coefficient, the first displacement being indicated by the first command generated by the first command generating module. According to this configuration, the second displacement maintaining linearity with respect to the first displacement indicated by the first command generated by the first command generating module can be output as the second command.

The second command generating module may output a displacement as the second command, the displacement being calculated by multiplying a total displacement from an operation start position to an operation end position of the gripper by a progress rate of the operation profile. According to this configuration, the displacement maintaining linearity with respect to the progress rate of the operation profile can be output as the second command.

A processor of the controller may execute a control program. The control program may include a function block configured to define each of the first command generating module and the second command generating module. According to this configuration, positioning of the gripper in conjunction with the operation of the gripper of the robot can be realized only by including the function blocks in the control program.

According to another aspect, a controller is configured to control a robot to which a gripper having a plurality of claws is attached at an arm end of the robot as an end effector, the controller including: a first command generating module configured to generate a first command to close the claws of the gripper in accordance with a predetermined operation profile; and a second command generating module configured to generate a second command to move the arm end of the robot along a predetermined direction by a displacement calculated in accordance with the first command generated by the first command generating module.

The foregoing and other objects, features, aspects and advantages of the present invention will become more apparent from the following detailed description of the present invention when taken in conjunction with the accompanying drawings.

BRIEF DESCRIPTION OF THE DRAWINGS

Fig. 1 is a schematic diagram illustrating an overall configuration example of a robot system according to the present embodiment.

Fig. 2 is a schematic diagram illustrating a hardware configuration example of the robot system according to the present embodiment.

Fig. 3 is a schematic diagram illustrating a functional configuration example provided by a control program of the robot system according to the present embodiment.

Figs. 4A to 4C are each a time chart illustrating one example of an operation profile of a gripper of the robot system according to the present embodiment.

Fig. 5 is a diagram illustrating one example of the control program for realizing the functional configuration example illustrated in Fig. 3.

Figs. 6A to 6E are schematic diagrams illustrating an operation example of the robot system according to the present embodiment.

Fig. 7 is a time chart of an operation including synchronization control of the robot system according to the present embodiment.

Figs. 8A to 8C are time charts illustrating comparative examples of the operation of the robot system according to the present embodiment.

Fig. 9 is a flowchart illustrating an example of a procedure for creating the control program executed by a robot controller of the robot system according to the present embodiment.

Fig. 10 is a schematic diagram illustrating a modification of the hardware configuration example of the robot system according to the present embodiment.

DESCRIPTION OF THE PREFERRED EMBODIMENTS

Hereinafter, referring to the drawings, embodiments of the present invention will be described in detail. Note that in figures, the same or corresponding portions are denoted by the same reference signs, and description thereof will not be repeated.

<A. Overall configuration example of robot system>

First, an overall configuration example of a robot system 1 according to the present embodiment will be described.

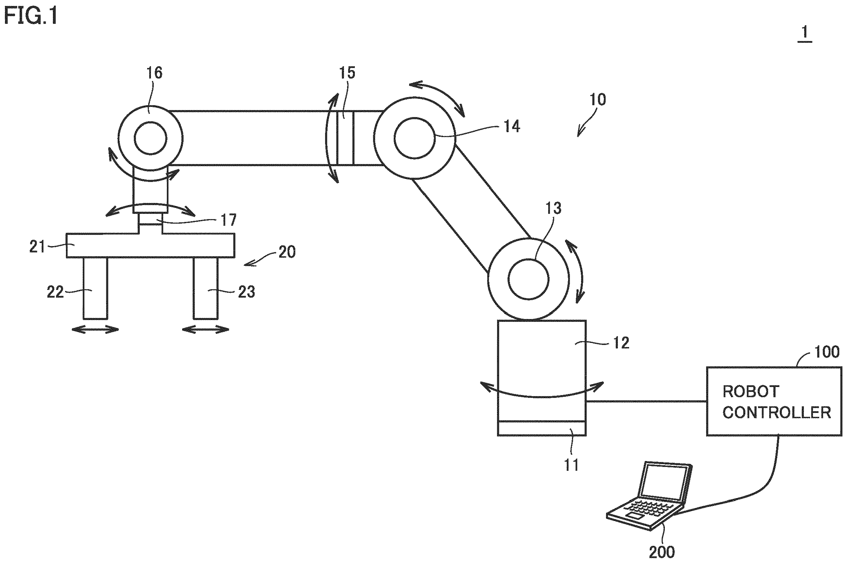

Fig. 1 is a schematic diagram illustrating the overall configuration example of robot system 1 according to the present embodiment. Referring to Fig. 1, robot system 1 includes an articulated robot (hereinafter, simply referred to as a "robot 10".) and a robot controller 100 configured to robot 10.

Robot 10 includes a base 11 and a plurality of movable portions 12, 13, 14, 15, 16, 17. Movable portions 12, 13, 14, 15, 16, 17 correspond to joints of robot 10. Each of movable portions 12, 13, 14, 15, 16, 17 drives a link configuring robot 10 along a rotation axis as illustrated in Fig. 1.

A gripper 20 having a plurality of claws is attached to robot 10 as an end effector. More specifically, gripper 20 is attached at an arm end of robot 10 as the end effector. Gripper 20 is a kind of robot hand, and is used for applications such as gripping a workpiece and the like. Gripper 20 may be referred to as a hand or a chuck.

Gripper 20 has the plurality of claws, and grips the workpiece or releases the gripping by changing a distance between the claws. Gripper 20 illustrated in Fig. 1 includes a body portion 21 and two claws 22, 23. The distance between claw 22 and claw 23 is adjusted by a motor (not illustrated) or air pressure. Hereinafter, while a configuration in which claws 22, 23 are motor-driven will be mainly described, a configuration in which the claws are pneumatically driven may be adopted.

An information processing apparatus 200 may be connected to robot controller 100. Information processing apparatus 200 is typically a general-purpose computer, presents information from robot controller 100 to a user, and gives an arbitrary command to robot controller 100 in accordance with a user manipulation.

<B. Hardware configuration example of robot system>

Next, a hardware configuration example of robot system 1 according to the present embodiment will be described.

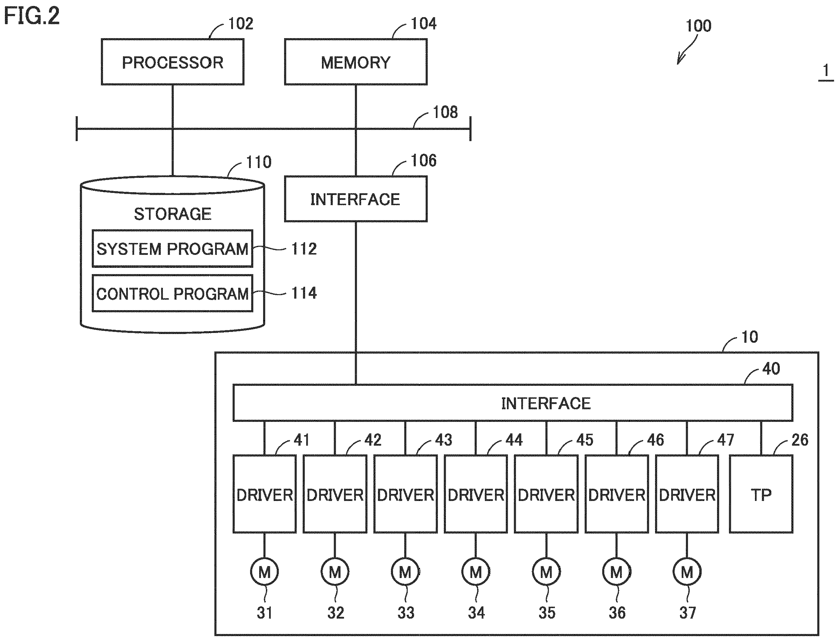

Fig. 2 is a schematic diagram illustrating the hardware configuration example of robot system 1 according to the present embodiment. Referring to Fig. 2, robot 10 includes motors 31, 32, 33, 34, 35, 36 respectively associated with movable portions 12, 13, 14, 15, 16, 17, and drivers 41, 42, 43, 44, 45, 46 configured to respectively drive motors 31, 32, 33, 34, 35, 36.

In addition, robot 10 includes a motor 37 configured to drive claws 22, 23 of gripper 20 and a driver 47 configured to drive motor 37.

Further, robot 10 includes a teaching pendant 26. Teaching pendant 26 performs teaching or the like of robot 10 according to a user manipulation. Teaching pendant 26 may be configured to be detachable from robot 10.

Drivers 41, 42, 43, 44, 45, 46, 47 and teaching pendant 26 are electrically connected to robot controller 100 via an interface 40.

Robot controller 100 is a type of computer, and includes a processor 102, a memory 104, an interface 106, and a storage 110 as main hardware components. These components are electrically connected via a bus 108.

Processor 102 is typically configured of a central processing unit (CPU), a micro-processing unit (MPU), and the like. Memory 104 is typically configured of a volatile storage device such as a dynamic random access memory (DRAM) and a static random access memory (SRAM). Storage 110 is typically configured of a nonvolatile storage device such as a solid state disk (SSD) and a flash memory. Storage 110 stores a system program 112 for realizing basic processing and a control program 114. Control program 114 includes computer-readable instructions for controlling robot 10. Processor 102 reads system program 112 and control program 114 stored in storage 110, develops the system program and the control program in memory 104, and executes the system program and the control program to realize processing for controlling robot 10 as described later.

Interface 106 is responsible for exchanging signals and/or data between robot controller 100 and robot 10. In robot system 1, commands for controlling drivers 41, 42, 43, 44, 45, 46, 47 are transmitted from robot controller 100 to robot 10.

While Fig. 2 illustrates the configuration example in which necessary processing is provided by processor 102 executing the program, a part or all of the provided processing may be implemented using a dedicated hardware circuit (e.g., an application specific integrated circuit (ASIC), a field-programmable gate array (FPGA), or the like).

While Fig. 2 illustrates an example in which robot controller 100 is configured independently of robot 10, some or all of the functions and the processing provided by robot controller 100 may be incorporated in robot 10. In this case, robot controller 100 may be implemented as a controller dedicated to robot control, or may be implemented using a general-purpose PLC (programmable controller) or a personal computer.

Further, some or all of the functions and the processing provided by robot controller 100 may be realized by using computing resources on a network referred to as a so-called cloud.

As described above, robot system 1 according to the present embodiment may be implemented in any manner.

<C. Synchronization control of robot system>

Next, synchronization control of robot system 1 according to the present embodiment will be described.

As a typical operation of robot 10 to which gripper 20 is attached at the arm end of the robot as the end effector, an operation of bringing the arm end (gripper 20) of robot 10 close to the workpiece to be gripped and closing the claws of gripper 20 in accordance with the approach to the workpiece is assumed. In order to link the above-described operations of robot 10 and gripper 20, it is necessary to adjust the operations of robot 10 and gripper 20 in units of control cycles so as to close the claws of gripper 20 at timing when robot 10 reaches a position where the workpiece is gripped. Note that closing the claws may include not only a state where the two claws are in contact with each other but also a state where the two claws are brought close to each other up to a distance corresponding to a size of the workpiece.

In such adjustment, a timing chart indicating the operations of robot 10 and gripper 20 is often created.

However, it takes time to adjust the operation of each of robot 10 and gripper 20, and a certain degree of experience is also required, and it is not easy for a user with poor knowledge to perform the adjustment.

Therefore, robot system 1 according to the present embodiment provides a configuration that can more easily realize control for synchronizing the operation of robot 10 and the operation of gripper 20.

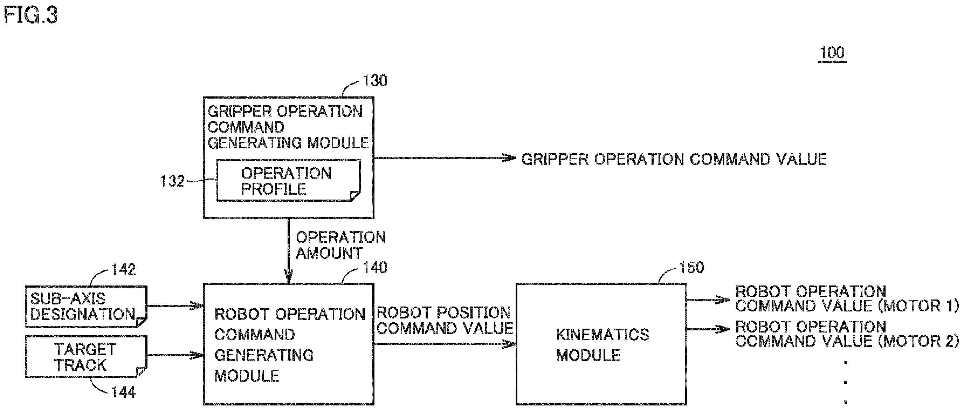

Fig. 3 is a schematic diagram illustrating a functional configuration example provided by control program 114 of robot system 1 according to the present embodiment. Modules illustrated in Fig. 3 are typically realized by processor 102 of robot controller 100 executing control program 114.

Referring to Fig. 3, robot controller 100 includes, as functional configurations, a gripper operation command generating module 130, a robot operation command generating module 140, and a kinematics module 150.

Gripper operation command generating module 130 generates a gripper operation command value (first command) in accordance with a predetermined operation profile 132. That is, gripper operation command generating module 130 generates a command to close claws 22, 23 of gripper 20 in accordance with operation profile 132. The gripper operation command value may be, for example, a torque command value, a rotational speed command value, a position command value, or the like for each control cycle with respect to motor 37 configured to drive claws 22, 23 of gripper 20.

In addition, gripper operation command generating module 130 outputs an operation amount according to the gripper operation command value generated in accordance with predetermined operation profile 132. The operation amount may be a displacement (a change amount of a position) calculated in accordance with operation profile 132, or may be a progress rate indicating a degree of progress in one cycle defined in operation profile 132.

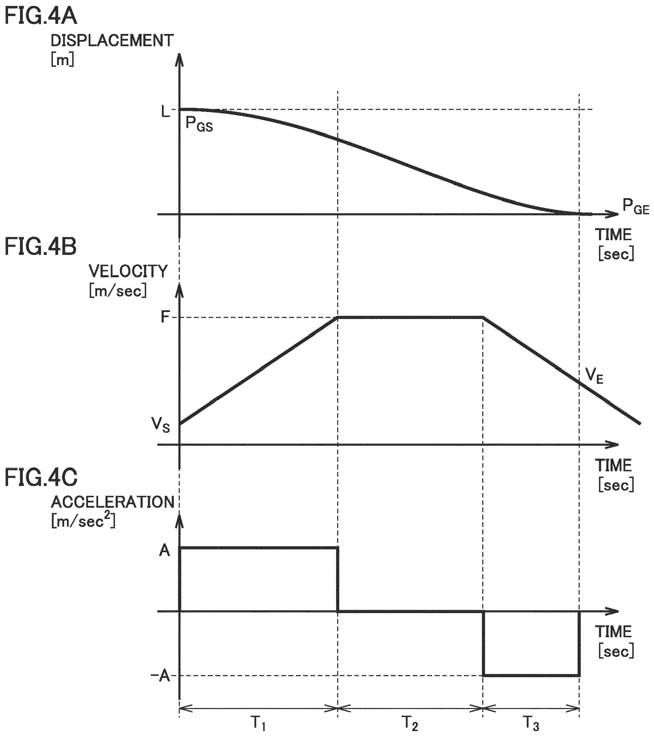

Figs. 4A to 4C are each a time chart illustrating one example of operation profile 132 of gripper 20 of robot system 1 according to the present embodiment. Fig. 4A illustrates the distance (displacement) between the claws, Fig. 4B illustrates a change rate of the distance between the claws, and Fig. 4C illustrates a change acceleration of the distance between the claws. Note that, regarding the change rate of the distance and the change acceleration of the distance, a direction in which the distance between the claws decreases is calculated as positive.

As illustrated in Figs. 4A to 4C, the claws of the gripper 20 move from an operation start position $P_{GS}$ to an operation end position $P_{GE}$ during periods $T_1$, $T_2$, $T_3$. Period $T_1$ is an acceleration period, period $T_2$ is a constant velocity operation period, and period $T_3$ is a deceleration period.

Note that lengths of periods $T_1$, $T_2$, $T_3$, operation start position $P_{GS}$, and operation end position $P_{GE}$ (alternatively, a moving distance $P_{GE}$-$P_{GS}$) can be arbitrarily set.

As illustrated in Fig. 4A, operation profile 132 may define the change of the distance between the claws of gripper 20 with respect to time. Alternatively, as illustrated in Figs. 4B and 4C, change in the change rate of the distance between the claws of gripper 20 and in the change acceleration with respect to time may be defined.

Referring again to Fig. 3, robot operation command generating module 140 generates a robot position command value (second command) in accordance with a target track 144. The robot position command value is generally a value (including position three dimension and posture three dimension) designating a position and a posture of a tool center point (TCP) which corresponds to the arm end of robot 10, and may be coordinate values in a global coordinate system or coordinate values in a robot coordinate system.

Robot operation command generating module 140 calculates the robot position command value for an axis designated by a sub-axis designation 142 in conjunction with the operation amount from gripper operation command generating module 130. That is, robot operation command generating module 140 generates the command (robot position command value) to move the arm end of robot 10 by a displacement calculated in accordance with the command generated by gripper operation command generating module 130 along a predetermined direction.

For example, a case is assumed where the arm end of robot 10 moves from an operation start position $P_{RZS}$ to an operation end position $P_{RZE}$ along a Z axis in conjunction with the movement of the claws of gripper 20 from operation start position $P_{GS}$ to operation end position $P_{GE}$. Note that operation start position $P_{RZS}$ and operation end position $P_{RZE}$ are positions (one-dimensional values) in a Z-axis direction.

A position related to the operation from operation start position $P_{RZS}$ to operation end position $P_{RZE}$ is determined in conjunction with the operation amount accompanying the movement from operation start position $P_{GS}$ to operation end position $P_{GE}$. More specifically, when robot 10 is operated in proportion to the operation amount of gripper 20, a robot position command $P_{RZ}(t)$ is calculated as follows using a position $P_G(t)$ of each of the claws of gripper 20.

$$P_{RZ}(t) = P_{RZS} + (P_G(t) - P_{GS}) \times (P_{RZE}-P_{RZS})/(P_{GE}-P_{GS})$$

That is, a value obtained by multiplying a displacement of position $P_G(t)$ of the claw of gripper 20 from operation start position $P_{GS}$ by a ratio of a total operation amount of gripper 20 to a total operation amount of robot 10 is a displacement of robot position command $P_{RZ}(t)$ from operation start position $P_{RZS}$. As described above, robot operation command generating module 140 outputs, as the robot position command value, the displacement calculated by multiplying the displacement indicated by the gripper operation command value generated by gripper operation command generating module 130 by a predetermined coefficient.

Alternatively, when a progress rate $\alpha$ ($\alpha$ = 0 to 100%) of operation profile 132 of gripper 20 is used, robot position command $P_{RZ}(t)$ is calculated as follows.

$$P_{RZ}(t) = P_{RZS} + \alpha \times (P_{GE}-P_{GS})$$

That is, a value obtained by multiplying the total operation amount of robot 10 by progress rate $\alpha$ of operation profile 132 of gripper 20 is the displacement of robot position command $P_{RZ}(t)$ from operation start position $P_{RZS}$. In the examples illustrated in Figs. 4A to 4C, progress rate $\alpha$ of operation profile 132 of gripper 20 means a ratio of a currently elapsed time length to a total operation period (= $T_1$ + $T_2$ + $T_3$).

As described above, robot operation command generating module 140 outputs, as the robot position command value, the displacement calculated by multiplying the total displacement of gripper 20 from operation start position $P_{GS}$ to operation end position $P_{GE}$ by progress rate $\alpha$ of operation profile 132.

As described above, in robot system 1 according to the present embodiment, since the arm end of robot 10 moves in conjunction with the gripping operation by gripper 20, the claws of gripper 20 can be closed completely at timing when gripper 20 reaches a predetermined pick position (position where the workpiece is gripped).

According to kinematics of robot 10, kinematics module 150 calculates a robot operation command value for supporting a position or an angle of each joint from the robot position command value from robot operation command generating module 140.

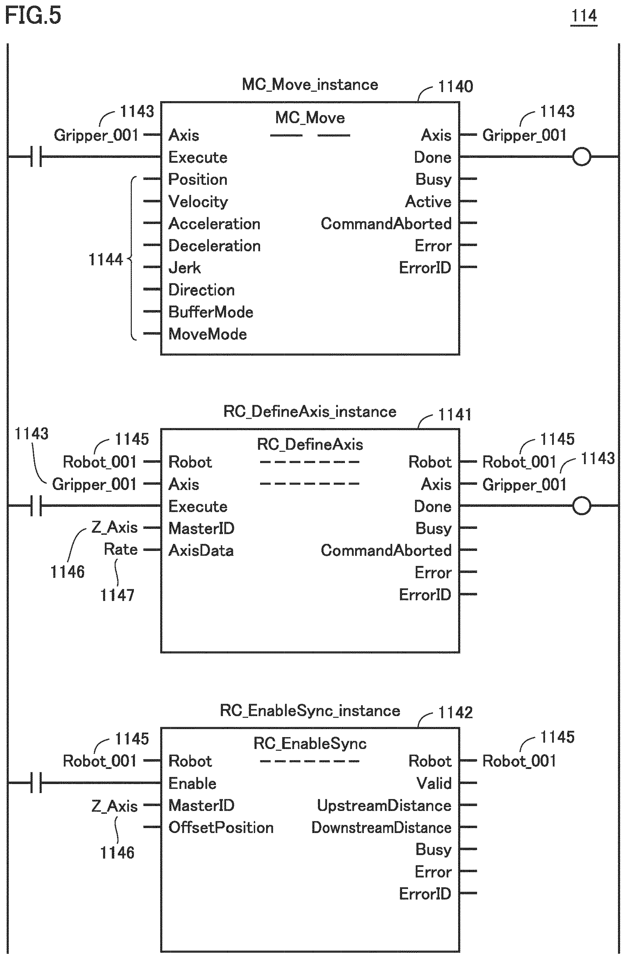

Fig. 5 is a diagram illustrating one example of control program 114 for realizing the functional configuration example illustrated in Fig. 3. Referring to Fig. 5, control program 114 includes a function block 1140 for designating operation profile 132, a function block 1141 for setting a main axis, and a function block 1142 for synchronously controlling the robot. The main axis may be set as a virtual axis.

Function block 1140 is an instruction for defining gripper operation command generating module 130 (Fig. 3). More specifically, an axis to be controlled according to operation profile 132 is designated in function block 1140. In the example illustrated in Fig. 5, a variable 1143 indicating gripper 20 (motor configured to drive claws 22, 23) is set in an Axis input/output of function block 1140.

In addition, operation profile 132 is set in function block 1140. In the example illustrated in Fig. 5, information indicating operation profile 132 is input to a plurality of inputs 1144 such as Position, Velocity, Acceleration, Deceleration, Jerk, Direction, BufferMode, and MoveMode of function block 1140.

Function block 1141 and function block 1142 are instructions for defining robot operation command generating module 140 (Fig. 3).

In function block 1141, a robot and an axis that perform following operation are designated. In the example illustrated in Fig. 5, a variable 1145 indicating a target robot is set in a Robot input/output of function block 1141, and a variable indicating a Z axis is designated in a MasterID input of function block 1141.

In addition, the main axis (virtual axis) is designated in function block 1141. In the example illustrated in Fig. 5, variable 1143 indicating gripper 20 (motor configured to drive claws 22, 23) is set in the Axis input/output of function block 1141.

Further, in function block 1141, information for linking the main axis and the sub-axis is designated. In the example illustrated in Fig. 5, a variable 1147 indicating a ratio between the operation amount (displacement) of the main axis and a displacement generated by the sub-axis is set in an AxisData input of function block 1141.

Function block 1142 is an instruction for enabling synchronization control. When an Execute input of function block 1142 is enabled, robot 10 is synchronously controlled in conjunction with the operation of the gripper 20.

<D. Operation example>

Next, an operation example of robot system 1 according to the present embodiment will be described.

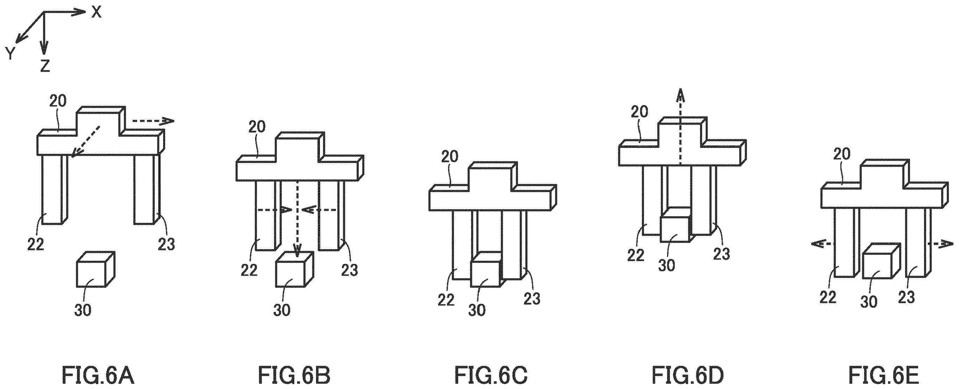

Figs. 6A to 6E are schematic diagrams illustrating the operation example of robot system 1 according to the present embodiment. Figs. 6A to 6E illustrate an example in which robot 10 picks a workpiece 30 and places workpiece 30 at another position. Note that for convenience of description, robot 10 itself is not illustrated, and gripper 20 attached at the arm end of robot 10 is mainly illustrated.

More specifically, first, robot controller 100 gives a control command to robot 10 to move the arm end of robot 10 to a position (pick start position) where approach to workpiece 30 is started (see Fig. 6A). Subsequently, robot controller 100 enables synchronization control between gripper 20 and robot 10 (see Fig. 6B). That is, robot controller 100 gives a command for closing claws 22, 23 to gripper 20, and gives robot 10 a command for generating a displacement according to the operation amount of gripper 20 along the Z axis. Finally, gripper 20 completely closes claws 22, 23 at the timing when gripper 20 reaches the position (pick position) where workpiece 30 is gripped (see Fig. 6C). Note that in this state, the synchronization control may be disabled.

Subsequently, robot controller 100 gives a control command to robot 10 to raise gripper 20 to a predetermined height in a state where gripper 20 grips workpiece 30 (see Fig. 6D). Further, robot controller 100 gives a control command to robot 10 to move the arm end of robot 10 to a position (place position) where workpiece 30 is released, and further gives a command for opening claws 22, 23 to gripper 20 (see Fig. 6E).

The processing of picking and placing workpiece 30 is completed by such a series of operations.

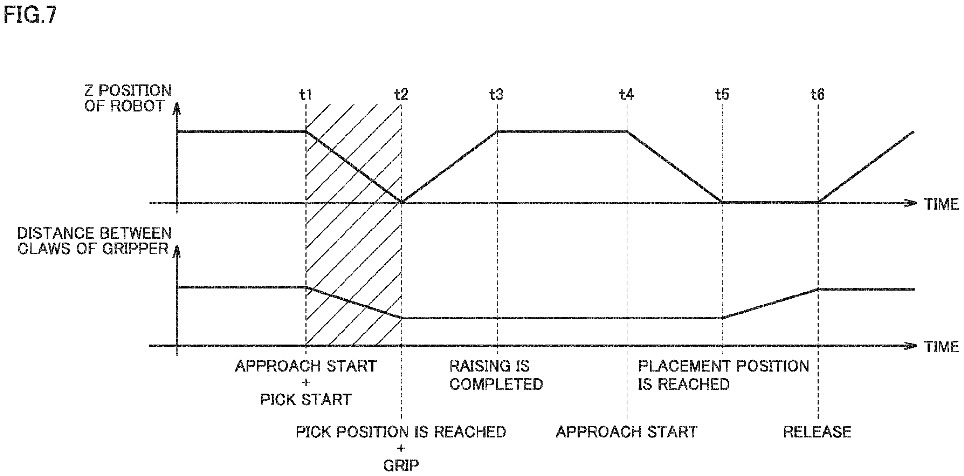

Fig. 7 is a time chart of an operation including the synchronization control of robot system 1 according to the present embodiment. Fig. 7 illustrates a time chart of a position of robot 10 in the Z-axis direction and a time chart of the distance between the claws of the gripper 20.

At time 11, gripper 20 of robot 10 starts approach from the pick start position. At this time, the synchronization control is enabled, the claws of gripper 20 are closed, and gripper 20 approaches workpiece 30. At time t2, gripper 20 of robot 10 reaches the pick position and grips workpiece 30. That is, at time t2, the operation of gripping workpiece 30 is completed in terms of both the position of robot 10 in the Z-axis direction and the distance between the claws of gripper 20.

Thereafter, the arm end of robot 10 rises in a state where workpiece 30 is gripped, and moves to a placement start position when the raising is completed at time t3. At time t4, gripper 20 of robot 10 starts approach from the placement start position. Gripper 20 of robot 10 reaches a placement position at time t5, and releases workpiece 30 at time t6. Thereafter, gripper 20 of robot 10 rises again and returns to an initial position.

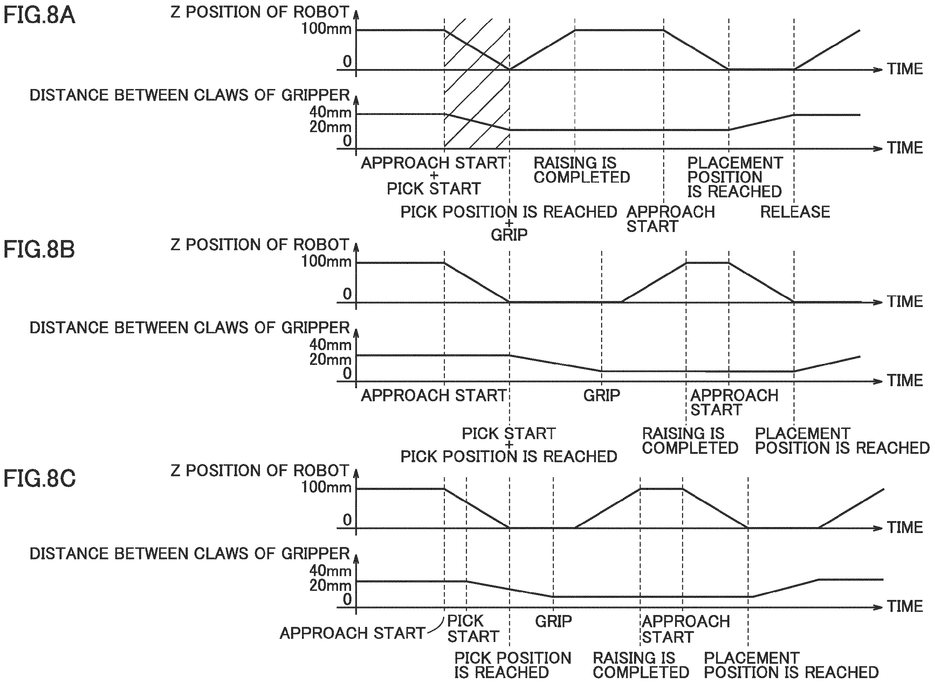

Figs. 8A to 8C are time charts illustrating comparative examples of the operation of robot system 1 according to the present embodiment. Similarly to Fig. 7, Fig. 8A illustrates a time chart of the operation including the synchronization control.

On the other hand, Figs. 8B and 8C illustrate time charts in a case where the timing is manually adjusted instead of the synchronization control according to the present embodiment.

More specifically, the time chart illustrated in Fig. 8B corresponds to an operation of waiting for gripper 20 of robot 10 to reach the pick position and starting to close the claws of gripper 20. As illustrated in Fig. 8B, since gripper 20 of robot 10 waits for reaching the pick position, entire processing time becomes longer than the operation illustrated in Fig. 8A.

In addition, the time chart illustrated in Fig. 8C corresponds to an operation of starting to close the claws of gripper 20 earlier in anticipation of gripper 20 of robot 10 reaching the pick position in the time chart illustrated in Fig. 8B. As illustrated in Fig. 8C, by starting to close the claws of gripper 20 earlier, the entire processing time can be shortened as compared with the operation illustrated in Fig. 8B. However, in order to shorten the entire processing time to the same time as that in Fig. 8A, it is necessary to adjust, by trial and error, the timing when the claws of gripper 20 start to be closed.

In contrast, in the synchronization control according to the present embodiment, the distance between the claws of gripper 20 and the position of gripper 20 are controlled in conjunction with each other, and thus, such trial-and-error adjustment is unnecessary. That is, minimum operation time can be realized without performing the trial-and-error adjustment.

<E. Example of procedure for creating control programming>

Next, an example of a procedure for creating control program 114 executed by robot controller 100 of robot system 1 according to the present embodiment will be described.

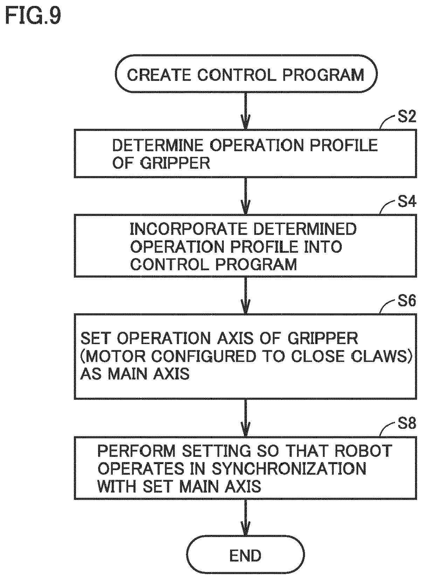

Fig. 9 is a flowchart illustrating the example of the procedure for creating control program 114 executed by robot controller 100 of robot system 1 according to the present embodiment. Referring to Fig. 9, the user determines operation profile 132 of gripper 20 (step S2). Operation profile 132 of gripper 20 may be obtained by measuring an actual operation of gripper 20, or may be arbitrarily designed on the basis of design values of gripper 20 or the like.

Subsequently, the user incorporates determined operation profile 132 into control program 114 (step S4), and sets an operation axis (motor for closing the claws) of gripper 20 as the main axis in control program 114 (step S6). Note that the setting of the main axis is described in control program 114.

Then, the user performs setting so that robot 10 operates in synchronization with the set main axis (step S8). Note that the setting of the operation is described in control program 114.

Control program 114 is created by the above-described processing procedure.

<F. Modification>

In the above description, while an example in which the driver and the motor configured to drive the claws of gripper 20 are configured as a part of the configuration of robot 10 has been described, the configuration for driving the claws of gripper 20 may be provided independently of robot 10.

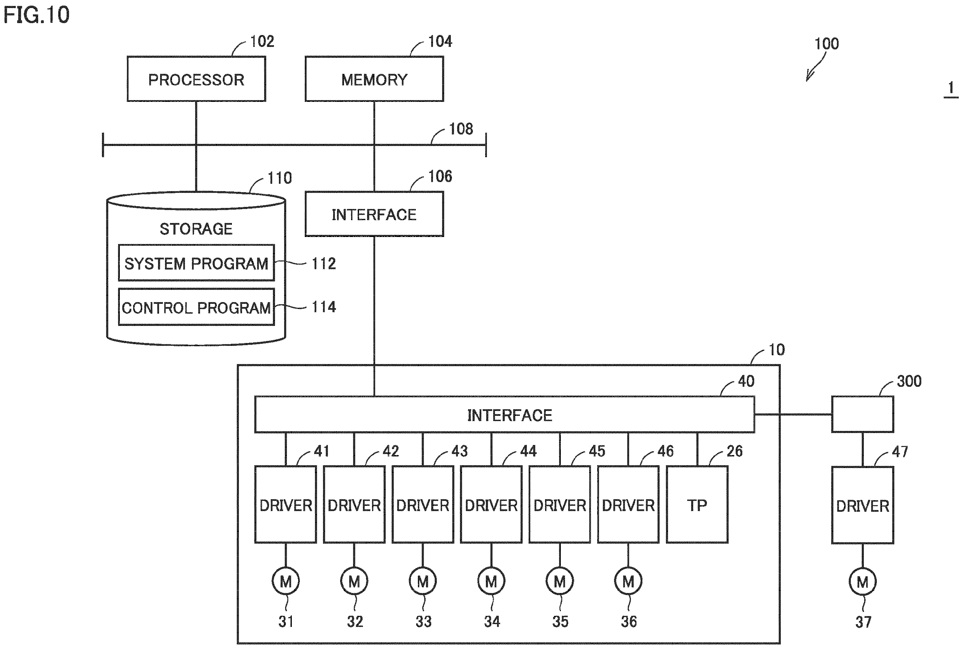

Fig. 10 is a schematic diagram illustrating a modification of the hardware configuration example of robot system 1 according to the present embodiment. Referring to Fig. 10, robot system 1 includes a gripper controller 300 in addition to the robot 10. Gripper controller 300 receives a command from interface 40 of robot 10, and driver 47 drives motor 37 to change the distance between the claws of gripper 20.

In such a configuration, operation profile 132 described above may be set as a virtual axis to reproduce behavior of gripper controller 300.

<G. Advantages>

According to the present embodiment, the position of the gripper can be automatically determined in conjunction with the operation of the gripper of the robot. Therefore, the cycle time can be shortened without adjusting the operation of the gripper and the position control of the gripper (the operation of the robot) by trial and error. In addition, since the operation of the gripper and the position control of the gripper (operation of the robot) can be linked, interlock between the gripper and the robot, or the like is substantially unnecessary, and the design and the like can be facilitated.

Although the present invention has been described and illustrated in detail, it is clearly understood that the same is by way of illustration and example only and is not to be taken by way of limitation, the scope of the present invention being interpreted by the terms of the appended claims.

**Claims**

1.  A robot system (1) comprising:

    a robot (10) to which a gripper (20) having a plurality of claws (22, 23) is attached at an arm end of the robot as an end effector; and
    a controller (100) configured to control the robot,
    wherein the controller comprises:

    a first command generating module (130) configured to generate a first command to close the claws of the gripper in accordance with a predetermined operation profile; and
    a second command generating module (140) configured to generate a second command to move the arm end of the robot along a predetermined direction by a displacement calculated in accordance with the first command generated by the first command generating module.

2.  The robot system according to claim 1, wherein the operation profile defines change of a distance between the claws of the gripper with respect to time.

3.  The robot system according to claim 1 or 2, wherein the second command generating module is configured to output a second displacement as the second command, the second displacement being calculated by multiplying a first displacement by a predetermined coefficient, the first displacement being indicated by the first command generated by the first command generating module.

4.  The robot system according to claim 1 or 2, wherein the second command generating module is configured to output a displacement as the second command, the displacement being calculated by multiplying a total displacement from an operation start position to an operation end position of the gripper by a progress rate of the operation profile.

5.  The robot system according to any one of claims 1 to 4, wherein a processor of the controller is configured to execute a control program (114), and

    the control program comprises a function block configured to define each of the first command generating module and the second command generating module.

6.  A controller (100) configured to control a robot (10) to which a gripper (20) having a plurality of claws (22, 23) is attached at an arm end of the robot as an end effector, the controller comprising:

    a first command generating module (130) configured to generate a first command to close the claws of the gripper in accordance with a predetermined operation profile; and
    a second command generating module (140) configured to generate a second command to move the arm end of the robot along a predetermined direction by a displacement calculated in accordance with the first command generated by the first command generating module.

7.  The controller according to claim 6, wherein the operation profile defines change of a distance between the claws of the gripper with respect to time.

8.  The controller according to claim 6 or 7, wherein the second command generating module is configured to output a second displacement as the second command, the second displacement being calculated by multiplying a first displacement by a predetermined coefficient, the first displacement being indicated by the first command generated by the first command generating module.

9.  The controller according to claim 6 or 7, wherein the second command generating module is configured to output a displacement as the second command, the displacement being calculated by multiplying a total displacement from an operation start position to an operation end position of the gripper by a progress rate of the operation profile.

10. The controller according to any one of claims 6 to 10, wherein a processor of the controller is configured to execute a control program (114), and
the control program comprises a function block configured to define each of the first command generating module and the second command generating module.

FIG.1

16

15

10

14

13

12

17

21

20

22 23

11

100

ROBOT
CONTROLLER

200

EP 4 245 477 A1

# FIG.2

EP 4 245 477 A1

FIG.3

GRIPPER OPERATION COMMAND GENERATING MODULE — 130

OPERATION PROFILE — 132

GRIPPER OPERATION COMMAND VALUE

OPERATION AMOUNT

SUB-AXIS DESIGNATION — 142

TARGET TRACK — 144

ROBOT OPERATION COMMAND GENERATING MODULE — 140

ROBOT POSITION COMMAND VALUE

KINEMATICS MODULE — 150

ROBOT OPERATION COMMAND VALUE (MOTOR 1)

ROBOT OPERATION COMMAND VALUE (MOTOR 2)

100

FIG.4A

DISPLACEMENT
[m]

L

$P_{GS}$

$P_{GE}$

TIME
[sec]

FIG.4B

VELOCITY
[m/sec]

F

$V_S$

$V_E$

TIME
[sec]

FIG.4C

ACCELERATION
[m/sec$^2$]

A

−A

$T_1$   $T_2$   $T_3$

TIME
[sec]

13

FIG.5                                                                                114

**MC_Move_instance**                                      1140

| | 1143 | | MC_Move | | | 1143 | |
Gripper_001 — Axis      —— ——      Axis — Gripper_001

├─┤├─ Execute                        Done ─◯

— Position                        Busy —

— Velocity                     Active —

— Acceleration      CommandAborted —

1144 ⎰ — Deceleration             Error —

— Jerk                        ErrorID —

— Direction

— BufferMode

⎱ — MoveMode

**RC_DefineAxis_instance**                                 1141

1143 | 1145 | | RC_DefineAxis | | | 1145 | 1143
╲ Robot_001 — Robot      – – – – – –      Robot — Robot_001 ╱
╲ Gripper_001 — Axis      – – – – – –      Axis — Gripper_001

├─┤├─ Execute                        Done ─◯

Z_Axis — MasterID              Busy —

Rate — AxisData      CommandAborted —

1146                             Error —

1147                             ErrorID —

**RC_EnableSync_instance**                                 1142

| 1145 | | RC_EnableSync | | | 1145 | |
Robot_001 — Robot      – – – – – –      Robot — Robot_001

├─┤├─ Enable                        Valid —

Z_Axis — MasterID      UpstreamDistance —

— OffsetPosition     DownstreamDistance —

1146                             Busy —

                                  Error —

                              ErrorID —

EP 4 245 477 A1

FIG.6A  FIG.6B  FIG.6C  FIG.6D  FIG.6E

FIG.7

Z POSITION
OF ROBOT

t1   t2   t3   t4   t5   t6

TIME

DISTANCE BETWEEN
CLAWS OF GRIPPER

TIME

APPROACH START
+
PICK START

RAISING IS
COMPLETED

PLACEMENT POSITION
IS REACHED

PICK POSITION IS REACHED
+
GRIP

APPROACH START

RELEASE

EP 4 245 477 A1

FIG.8A

Z POSITION OF ROBOT

100mm

0 — TIME

DISTANCE BETWEEN CLAWS OF GRIPPER

40mm
20mm
0 — TIME

APPROACH START
+
PICK START

RAISING IS
COMPLETED

PLACEMENT
POSITION
IS REACHED

PICK POSITION IS REACHED    APPROACH    RELEASE
+                           START
GRIP

FIG.8B

Z POSITION OF ROBOT

100mm

0 — TIME

DISTANCE BETWEEN CLAWS OF GRIPPER

40mm
20mm
0 — TIME

APPROACH START    GRIP    APPROACH
                          START

PICK START            RAISING IS    PLACEMENT
+                     COMPLETED     POSITION IS REACHED
PICK POSITION IS REACHED

FIG.8C

Z POSITION OF ROBOT

100mm

0 — TIME

DISTANCE BETWEEN CLAWS OF GRIPPER

40mm
20mm
0 — TIME

APPROACH START    PICK    GRIP    APPROACH
                  START           START

PICK POSITION    RAISING IS    PLACEMENT
IS REACHED       COMPLETED     POSITION IS REACHED

FIG.9

```
          ╭─────────────────────────────╮
          │   CREATE CONTROL PROGRAM    │
          ╰─────────────────────────────╯
                         │
                         ↓                    ⟋S2
          ┌─────────────────────────────┐
          │ DETERMINE OPERATION PROFILE │
          │ OF GRIPPER                  │
          └─────────────────────────────┘
                         │
                         ↓                    ⟋S4
          ┌─────────────────────────────┐
          │ INCORPORATE DETERMINED      │
          │ OPERATION PROFILE INTO      │
          │ CONTROL PROGRAM             │
          └─────────────────────────────┘
                         │
                         ↓                    ⟋S6
          ┌──────────────────────────────────┐
          │ SET OPERATION AXIS OF GRIPPER     │
          │ (MOTOR CONFIGURED TO CLOSE CLAWS) │
          │ AS MAIN AXIS                      │
          └──────────────────────────────────┘
                         │
                         ↓                    ⟋S8
          ┌─────────────────────────────┐
          │ PERFORM SETTING SO THAT ROBOT│
          │ OPERATES IN SYNCHRONIZATION  │
          │ WITH SET MAIN AXIS           │
          └─────────────────────────────┘
                         │
                         ↓
                  ╭─────────────╮
                  │     END     │
                  ╰─────────────╯
```

FIG.10

EP 4 245 477 A1

Europäisches
Patentamt

European
Patent Office

Office européen
des brevets

# EUROPEAN SEARCH REPORT

**Application Number**

EP 23 15 6253

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | WO 2016/192768 A1 (ABB SCHWEIZ AG [CH]) 8 December 2016 (2016-12-08) * page 1 – page 3; figure 3 * ----- | 1-10 | INV. B25J9/16 |
| T | Anonymous: "Logix5000 Controller Motion Instruction Set", , 1 March 2004 (2004-03-01), XP093071459, Retrieved from the Internet: URL:https://literature.rockwellautomation.com/ [retrieved on 2010-04-12] ----- | | |

TECHNICAL FIELDS
SEARCHED (IPC)

B25J

The present search report has been drawn up for all claims

| Place of search | Date of completion of the search | Examiner |
|---|---|---|
| The Hague | 7 August 2023 | Bassi, Luca |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

## ANNEX TO THE EUROPEAN SEARCH REPORT
## ON EUROPEAN PATENT APPLICATION NO.

EP 23 15 6253

This annex lists the patent family members relating to the patent documents cited in  the above-mentioned European search report.
The members are as contained in the European Patent Office EDP file on
The European Patent Office is in no way liable for these particulars which are merely given for the purpose of information.

07-08-2023

| Patent document cited in search report | | Publication date | Patent family member(s) | | Publication date |
|---|---|---|---|---|---|
| WO 2016192768 | A1 | 08-12-2016 | CN | 107645979 A | 30-01-2018 |
| | | | EP | 3304228 A1 | 11-04-2018 |
| | | | WO | 2016192768 A1 | 08-12-2016 |

EPO FORM P0459

For more details about this annex : see Official Journal of the European Patent Office, No. 12/82

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2013206425 A